# EUROPEAN PATENT APPLICATION

(11) **EP 1 742 290 A1**
(43) Date of publication of application: **10.01.2007**
(21) Application number: 06013863.3
(22) Date of filing: 04.07.2006
(51) Int. Cl.: H01Q 1/24, H01Q 5/00, B23K 26/40

(54) **Embedded type antenna pattern for portable terminal and method for manufacturing same**

(30) Priority: 04.07.2005 KR 20050059903
(71) Applicant: Samsung Electronics Co., Ltd., Suwon-si, Gyeonggi-Do (KR)
(72) Inventor: Young-Bae, Ji, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is an embedded type antenna pattern for a portable terminal and a method for manufacturing the same in which a metal film plated on an antenna is removed by using a laser beam and an antenna slot pattern is formed at the same time. The embedded type antenna pattern for a portable terminal includes an antenna plate plated with a metal film; and at least one antenna slot pattern formed by mounting the antenna plate to a laser cutting device, positioning the upper end surface of the plated metal film of the antenna plate and a head of the laser cutting device so that they are opposite to each other, and heating the surface of the metal film and then removing the plated metal film by using the laser beam launched from the head of the laser cutting device.

## Description

The present invention relates to an embedded type antenna pattern for a portable terminal and a method for manufacturing the same, and more particularly to an embedded type antenna pattern in which a metal film plated on an antenna is removed using a laser beam and an antenna slot pattern is formed at the same time.

Generally, the term "portable communication devices" refers to devices by which radio communication can be performed while carrying the device. Portable communication devices include a Hand-Held Phone (HHP), a CT-2 cellular phone, a digital phone, a Personal Communication System (PCS) phone, and a Personal Digital Assistant (PDA) and are sorted into various types according to their shapes. For example, the radio terminals are sorted into a bar type, a flip type, a folder type, and a slide type according to their shapes. The above-mentioned portable terminals necessarily include an antenna unit, a data input/output unit, and a data transceiver.

The data output device commonly used is an LCD, and the data input device is basically a plurality of keys arranged on a key pad used for data input. The keys include a send (SND) key which is a communication start button, a cancel key, a clear key (CLR), number keys, letter keys, an end (END) key, function keys, a power (PWR) key, etc.

Recently, the number of subscribers using the portable terminals has dramatically increased, and the portable terminals are so generalized that almost everyone now carries portable terminals. Although initially the portable terminals simply provided voice services, portable terminals providing a radio listening function, an MP3 function, a moving image watching function, a remote control function, etc. appear now.

Further, portable terminals providing a camera, high speed data communication, and voice communication functions have been developed. This means that many devices for satisfying various desires of consumers should be embedded in the portable terminals, and space for embedded type antennas has become smaller as the mounting areas of the other parts become larger.

For the above-mentioned functions, the antenna apparatus for receiving signals and transmitting signals are typically provided at a proper position of the portable terminals.

The antenna unit typically includes a whip antenna and a helical antenna. The helical antenna is commonly used to lower the mounting height of the antenna. Different from a rod antenna in which a rod is drawn out from the terminal to extend the length of the antenna, the helical antenna has a protruding portion on one side at the upper portion of the body of the terminal and is usually detachably fixed to the terminal. However, the terminal having the helical antenna does not have a good appearance due to the protruding portion of the antenna.

Recently, embedded type antennas are widely used in the terminals to overcome the above-mentioned disadvantage. A chip antenna, a planar inverted F antenna (PIFA), and an embedded type micro-strip patch antenna are mainly used as the embedded type antenna.

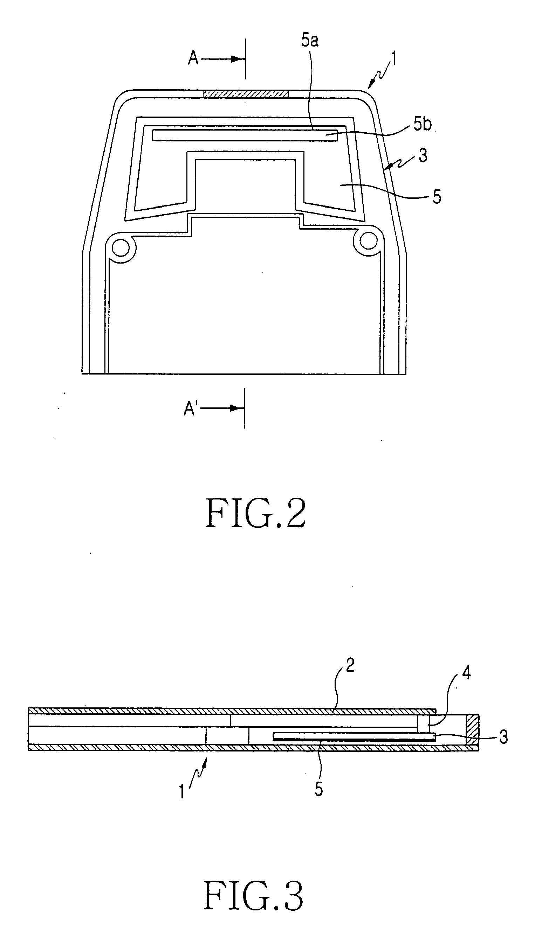

As shown in FIGs. 2 and 3, the embedded type antenna 3 is installed through an antenna installation portion 4, separated from the upper end portion of a printed circuit board (PCB) 2 provided in the terminal 1 by a predetermined distance. The installation portion 4 gives the PCB a predetermined height, for satisfactory transmission and reception of wave. Therefore, considering this fact, the embedded type antenna 3 is designed so that the antenna 3 is separated from the PCB by a predetermined height.

Further, as shown in FIG. 2, a conductive material 5 in which an antenna pattern 5a is formed is fused to the embedded antenna 3. The conductive material is commonly formed of a metal, and an antenna slot 5b is formed in the antenna pattern 5a to change antenna characteristics.

However, according to the conventional embedded type antenna, since the conductive material is a metal, which the antenna pattern is formed, is fused to the antenna, the assembling process time of the antenna increases. Further, since the conductive material is typically manufactured separately, the manufacturing cost increases.

Accordingly, the present invention has been made to solve the above-mentioned problems occurring in the prior art.

It is the object of the present invention to provide an embedded antenna pattern for a portable terminal and method for manufacturing the same in which, by removing a metal film using a laser beam from an antenna plated with the metal film and forming an antenna slot pattern at the same time, the antenna pattern can be easily manufactured.

This object is solved by the subject matter of the independent claims.

Preferred embodiments are defined in the dependent claims.

It is an aspect of the present invention to provide an embedded antenna pattern for a portable terminal and method for manufacturing the same in which, by removing a metal film using a laser beam from an antenna plated with the metal film and forming an antenna slot pattern at the same time, a fusion assembling process of a conventional antenna conductive material can be omitted, thereby improving the assembling process of the antenna.

It is still another aspect of the present invention to provide an embedded antenna pattern for a portable terminal and method for manufacturing the same which can reduce the manufacturing cost of an antenna by excluding a separate metal conductive material.

In order to accomplish the above, an embedded type antenna pattern for a portable terminal includes an antenna plate plated with a metal film; and at least one antenna slot pattern formed by mounting the antenna plate to a laser cutting device, positioning the upper end surface of the plated metal film of the antenna plate and a head of the laser cutting device so that they are opposite to each other, and heating the surface of the metal film and then removing the plated metal film using the laser beam launched from the head of the laser cutting device.

In order to accomplish the above, a method for manufacturing an embedded antenna pattern for a portable terminal includes plating a metal film on one surface of an antenna plate; mounting the plated antenna plate to a laser cutting device; positioning the upper end surface of the plated metal film of the antenna plate and a head of the laser cutting device so that they are opposite to each other; heating the surface of the metal film of the antenna plate by launching laser beam from the head of the laser cutting device; and removing the plated metal film of the antenna plate using the laser beam, thereby forming an antenna slot pattern.

The present invention will be more apparent from the following detailed description taken in conjunction with the accompanying drawings, in which:

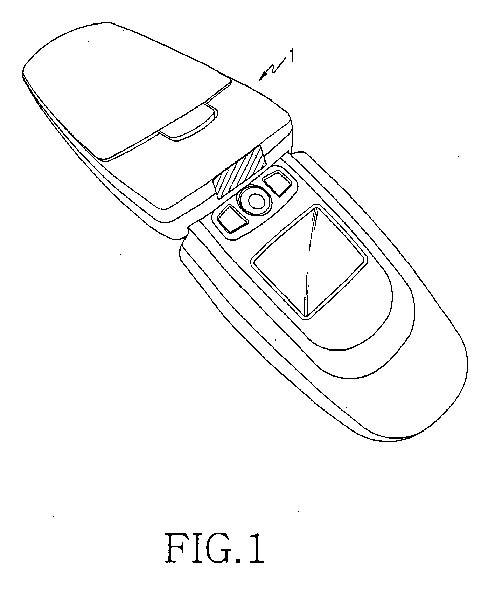

FIG. 1 is a perspective view showing a folder type terminal having a conventional embedded type antenna;
FIG. 2 is a plan view showing the interior of the terminal of FIG. 2;
FIG. 3 is a cross-sectional view taken along line A-A' of FIG. 2;
FIG. 4 is a perspective view showing a plated antenna plate of an embedded type antenna pattern of a portable terminal according to a preferred embodiment of the present invention;
FIG. 5 is a front view showing a laser cutting device removing a plated portion of the antenna plate of an embedded type antenna pattern of a portable terminal according to a preferred embodiment of the present invention;
FIG. 6 is a perspective view showing an antenna slot pattern is formed in an antenna plate of an embedded type antenna pattern of a portable terminal according to a preferred embodiment of the present invention; and
FIG. 7 is a flow chart explaining a method for manufacturing an embedded type antenna pattern of a portable terminal according to a preferred embodiment of the present invention.

Hereinafter, a preferred embodiment of the present invention will be described with reference to the accompanying drawings.

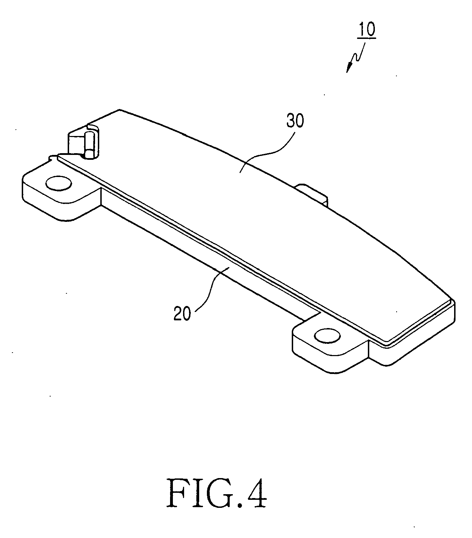

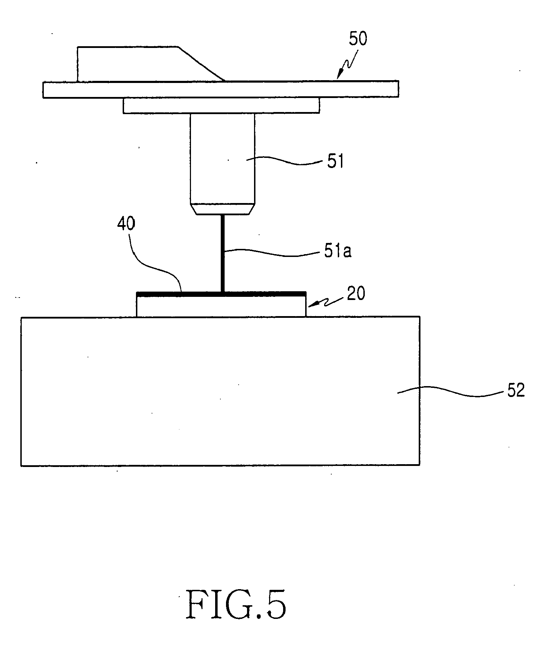

As shown in FIGs. 4 and 5, an embedded type antenna pattern 10 for a portable terminal according to the present invention includes an antenna plate 20 and at least one antenna slot pattern 40. A metal film is plated on one surface of the antenna plate 20 so that the antenna slot pattern 40 is formed by a laser beam 51a of a laser cutting device 50 which will be described below.

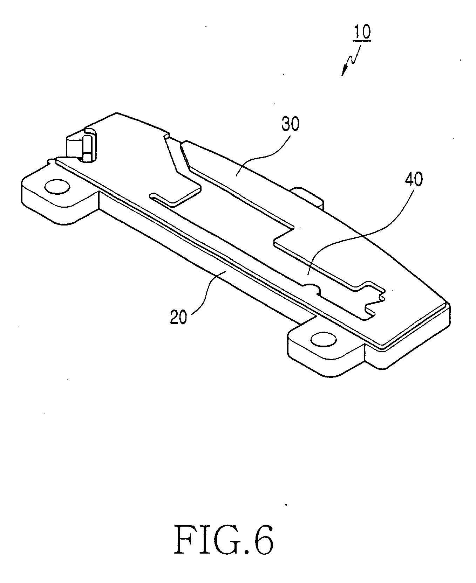

As shown in FIG. 6, the antenna slot pattern 40 is formed by mounting the antenna plate 20 plated with the metal film to a fixing jig 52 of the laser cutting device 50, positioning the metal film 30 of the antenna plate 20 and a head 51 of the laser cutting device 50 so that they are opposed to each other, launching laser beam 51 a from the head of the laser cutting device 50, and thus heating the metal film 30 and then removing the plated metal film 30 using the laser beam.

Preferably, the antenna plate 20 is formed of synthetic resin, and the metal film 30 is formed of an antenna conductive material.
A slot of the antenna slot pattern 40 can have various sizes, depths, and thicknesses. The antenna slot pattern 40 is formed vertically/horizontally as the head 51 of the laser cutting device 50 is moved.
Hereinafter, the operation of the embedded type antenna pattern for a portable terminal according to the preferred embodiment of the present invention will be described with reference to FIGs. 4 to 6. As shown in FIGs. 4 and 5, one surface of the embedded type antenna plate 20 is plated with the metal film 30 which is an antenna conductive material.
The plated antenna plate 20 is mounted to the fixing jig 52 of the laser cutting device 50. Then, the upper end surface of the metal film 30 plated on the antenna plate 20 and the head 51 of the laser cutting device 50 are positioned by the fixing jig 52, so as to be opposite to each other. As shown in FIG. 6, laser beam 51 a is launched from the head 51 of the laser cutting device 50, heating the surface of the metal film 30 of the antenna plate 20 and removing the plated metal film 30. Then, the antenna slot pattern 40 is formed by the removed metal film 30. The size and the thickness of a slot of the antenna slot pattern 40 can be varied. The antenna slot pattern 40 can be formed vertically/horizontally by moving the head 51 of the laser cutting device 50.

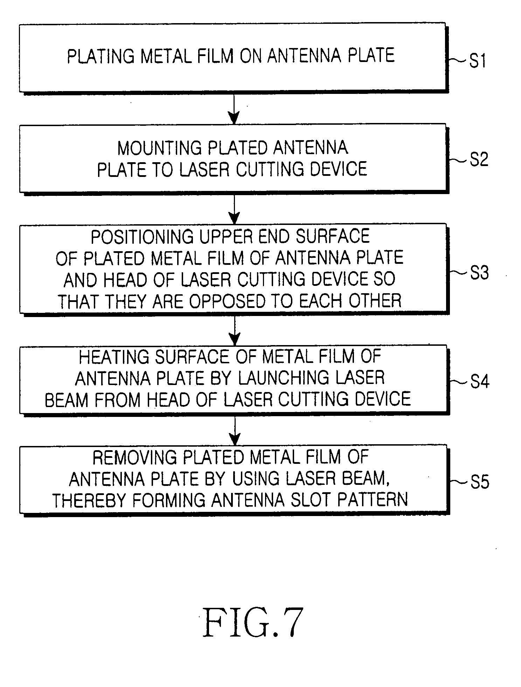

Hereinafter, a method for manufacturing the embedded type antenna pattern for a portable terminal according to the preferred embodiment of the present invention will be described with reference to FIG. 7.
As shown in FIG. 7, one surface of the embedded type antenna plate 20 is plated with the metal film 30 which is an antenna conductive metal at step S1. Then, the plated antenna plate 20 is mounted to the fixing jig 52 provided in the laser cutting device 50 at stepS2. The upper end surface of the metal film 30 plated on the antenna plate 20 and the head 51 of the laser cutting device 50 are positioned by the fixing jig 52 so as to be opposite to each other at step S3. Then, laser beam 51 a is launched from the head 51 of the laser cutting device 50 at step S4.

The laser beam 51 a heats the surface of the metal film 30 of the antenna plate 20 and removes the plated metal film 30. Then, the antenna slot pattern 40 is formed by the removed metal film 30, at step S5.

The size and the thickness of a slot of the antenna slot pattern 40 can be varied. The antenna slot pattern 40 can be formed vertically/horizontally by moving the head 51 of the laser cutting device 50.

According to the present invention, using a laser beam on an antenna on which a metal film, which is an antenna conductive material, is plated, an antenna slot pattern is formed at the same time when the metal film is removed, and an antenna pattern can be easily manufactured and the assembling process of the antenna can be improved.

While the invention has been shown and described with reference to certain preferred embodiments thereof, it will be understood by those skilled in the art that various changes in form and details may be made therein without departing from the scope of the invention as defined by the appended claims.

## Claims

1. An embedded type antenna pattern for a portable terminal, comprising:
an antenna plate plated with a metal film; and
at least one antenna slot pattern formed by mounting the antenna plate to a laser cutting device, positioning an upper end surface of the plated metal film of the antenna plate and a head of the laser cutting device so that they are opposed to each other, heating the surface of the metal film, and removing the plated metal film using a laser beam launched from the head of the laser cutting device.

2. An embedded type antenna pattern for a portable terminal, which comprises:
at least one antenna slot pattern formed by heating an upper end surface of a metal film and then removing the metal film using a laser beam launched from a head of a laser cutting device.

3. The embedded type antenna pattern according to claim 1 or 2, wherein the antenna plate is formed of synthetic resin.

4. The embedded type antenna pattern according to one of claims 1 to 3, wherein the metal film is formed of a conductive material.

5. The embedded type antenna pattern according to claim 1 to 4, wherein a size and thickness of a slot of the antenna slot pattern can vary.

6. The embedded type antenna pattern according to one of claims 1 to 5, wherein the antenna slot pattern is formed as the head of the laser cutting device is moved.

7. A method for manufacturing an embedded antenna pattern for a portable terminal, the method comprising:
plating a metal film on one surface of an antenna plate;
mounting the plated antenna plate on a laser cutting device;
positioning an upper end surface of the plated metal film of the antenna plate and a head of the laser cutting device in such a manner that the plated metal film of the antenna plate and the head of the laser cutting device are opposite to each other;
heating the surface of the metal film of the antenna plate by launching a laser beam from the head of the laser cutting device; and
removing the plated metal film of the antenna plate using the laser beam, thereby forming an antenna slot pattern.

8. The method according to claim 7, wherein, in the plating step, the metal film is formed of conductive metal.

9. The method according to claim 7 or 8, wherein, the step of forming the antenna slot pattern comprises forming the antenna slot pattern by moving the laser cutting device.
